(19) Europäisches Patentamt / European Patent Office / Office européen des brevets

(11) EP 3 122 041 A1

(12) EUROPEAN PATENT APPLICATION

(43) Date of publication:
25.01.2017 Bulletin 2017/04

(51) Int Cl.:
H04N 13/02 (2006.01)    G06T 7/00 (2017.01)

(21) Application number: 15306195.7

(22) Date of filing: 23.07.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicant: Thomson Licensing
92130 Issy-les-Moulineaux (FR)

(72) Inventor: Sorgi, Lorenzo
30655 Hannover (DE)

(74) Representative: Huchet, Anne et al
TECHNICOLOR
1-5, rue Jeanne d'Arc
92130 Issy-les-Moulineaux (FR)

(54) **METHOD AND APPARATUS FOR DETERMINING TWO-VIEW GEOMETRY OF TWO CAMERAS**

(57)     A method for determining a two-view geometry of two cameras and an apparatus (20) performing the method are described. A reception unit (21) receives at least two images each captured by one of the two cameras. An operation unit (22) extracts a plurality of correspondence features from the images, generates a matrix for each pair of the correspondence features and determine a two-view geometry of the two cameras by calculating a minimization of the sum of determinants of the matrices. Each matrix indicates a function of camera motions of the two cameras.

Fig. 1

EP 3 122 041 A1

**Description**

**TECHNICAL FIELD**

A method and an apparatus for determining two-view geometry of two cameras are described. In addition, a computer readable medium suitable for such a method and an apparatus is also presented.

**BACKGROUND**

For estimation of the geometry of multiple camera views, epipolar constraint is one of the common used fundamental theorems [I], which represents the intrinsic projective geometry between camera views and depends only on the relative pose between the cameras regardless of the scene structure. In general, the intrinsic geometry can be described as a 3x3 matrix of rank 2, denoted as Essential Matrix ($E$). If a point $X$ in 3D space is captured as $x$ in a first view (or image) and $x'$ in a second view (or image), the image points can be showed as satisfying the relation $< x',Ex >$ = 0, where $< a,b >$ represents the vector inner product [II].

The estimation of the essential matrix ($E$), or equivalently the estimation of a relative pose between two cameras, is generally denoted as two-view geometry estimation. Kruppa proposed a solution to the estimation, showing that, given enough (five) correspondences between two perspective views, it is possible to retrieve all the possible configurations of the cameras which constitute a set of eleven solutions [III]. Latter it was shown that only ten out of the eleven solutions are valid [IV].

Most of the techniques currently used in 3D vision systems attempt to solve high polynomial equations [V, VI, VII]. Since there is no general solution for fifth-degree or higher-degree polynomials according to the Abel-Ruffini theorem, iterative numerical routines are necessary to generate these solutions and make the solutions highly unstable due to the intrinsic illconditioned nature of the root finding problems.

One different approach was proposed to reformulate the essential matrix estimation as a constraint quadratic optimization problem by introducing two additional constraints [VIII]. The issue of finding the root of high degree polynomials is overcome in this approach. However, the use of multiple solution seeds in an iterative way as the starting point for the minimizer causes other unsolved problems such as the required amount of seed points in the solution space and how to sample these seed points.

**SUMMARY**

Therefore, it is an object to present an improved solution for determining two-view geometry of two cameras, and thus accordingly estimates the camera poses.

According to one embodiment, a method for determining a two-view geometry of two cameras is proposed. The method comprises: receiving at least two images each captured by one of the two cameras; extracting a plurality of correspondence features from the images; generating (12) a matrix for each pair of the correspondence features, the matrix indicating a function of camera motions of the two cameras; and determining a two-view geometry of the two cameras by calculating a minimization of the sum of determinants of the matrices.

In one embodiment, the correspondence features include a set of N point correspondences between the received images.

In one embodiment, the two-view geometry of the two cameras is determined using Perturbation Theorem and Levemberg-Marquardt iterations.

In one embodiment, the function of the matrix represents a volume of a tetrahedron implicitly drawn in 3D space by the corresponding pair of the extracted correspondence features. Preferably, calculating a minimization of the sum of determinants of the matrices includes solving the problem of

$$\{\bar{R},\bar{t}\} = \underset{\{R,t\}\in SO(3)}{\mathrm{argmin}}\left\{\sum_{k=1,\ldots,N}\det{}^2(A_k(R,t))\right\}$$

where $SO(3)$ is the space of Euclidean transformations, $\{\bar{R},\bar{t}\}$ is the estimated Euclidean transformation relating two camera systems, $A_k(R,t)$ is a real valued square matrix that is explicitly indicated as a function of $\{R,t\}$ and is generated using k-th point correspondence in such a way that its determinant det $A\_k(R,t)$ represents the volume of a tetrahedron identified in a 3D space, the tetrahedron being defined by two involving points and two camera centers.

According to one embodiment, an apparatus for determining a two-view geometry of two cameras is introduced, which comprises an image reception unit and an operation unit. The image reception unit is configured to receive at least two images each captured by one of the two cameras. The operation unit is configured to extract a plurality of correspondences from the images, to generate a matrix for each pair of the correspondence features, and to determine a two-view geometry of the two cameras by calculating a minimization of the sum of determinants of the matrices. The matrix indicates a function of camera motions of the two cameras.

In one embodiment, the operation unit preferably determines the two-view geometry of the two cameras using Perturbation Theorem and Levemberg-Marquardt iterations.

Also, a computer readable storage medium has stored therein instructions for determining a two-view geometry of two cameras, which, when executed by the computer, cause the computer to: receive at least two images each captured by one of the two cameras; extract a plurality of correspondence features from the images; generate a matrix for each pair of the correspondence features, the matrix indicating a function of camera motions of the two cameras; and determine a two-view geometry of the two cameras by calculating a minimization of the sum of determinants of the matrices.

The computer readable storage medium can be a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

The proposed method provides an improved solution for determining a two-view geometry of two cameras. By using the matrix indicating a function of camera motions of the two cameras and by calculating a minimization of the sum of determinants of the matrices, the accuracy for the determination of two-view geometry is increased resulted from the geometrical nature of the objective function of the matrices. The convexity subspace of the objective function is noticeably widened, which is highly desirable as it allows for a liable initialization of the numerical iterations of the subsequent calculation without the need of multiple seeds.

## BRIEF DESCRIPTION OF THE DRAWINGS

For a better understanding the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims.

Fig. 1 is a flow chart illustrating one preferred embodiment of a method for determining two-view geometry of two cameras.

Fig. 2 schematically illustrates a model of two cameras and the two-view projection in a calibrated camera space.

Fig. 3 illustrates exemplary evaluation and the estimated errors for one embodiment of the method for determining two-view geometry of two cameras.

Fig. 4 is a schematic diagram illustrating a preferred embodiment of an apparatus configured to perform the embodiments of a method for determining two-view geometry of two cameras.

## DETAILED DESCRIPTION OF PREFERRED EMBODIMENTS

Preferred embodiments of a method for determining a two-view geometry of two cameras will be described and explained in the following in detail. It should be noted that, when repeated and detailed descriptions of well-known functions or configurations may unnecessarily make obscure the gist of the present approach, the detailed description will be omitted.

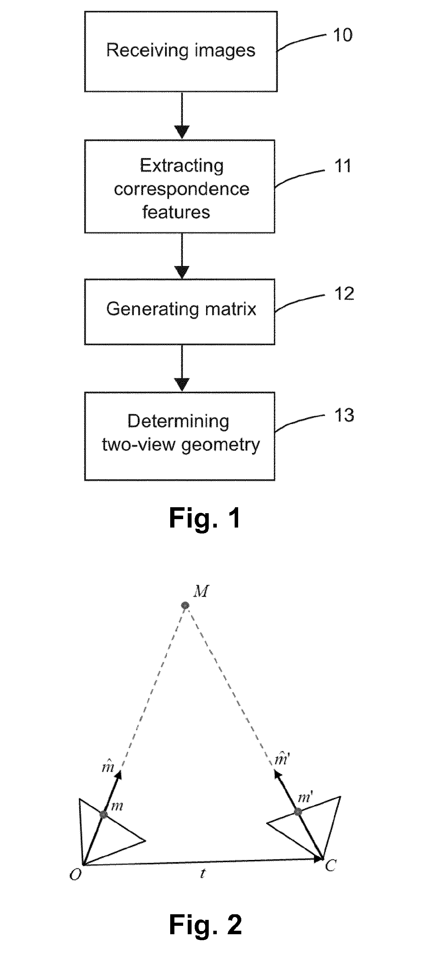

Fig. 1 schematically illustrates a preferred embodiment of the method for determining a two-view geometry of two cameras. The method comprises: receiving 10 at least two images each captured by one of the two cameras; extracting 11 a plurality of correspondence features from the images; generating 12 a matrix for each pair of the correspondence features; and determining 13 a two-view geometry of the two cameras by calculating a minimization of the sum of determinants of the matrices. The matrix is preferably a match matrix and indicates a function of camera motions of the two cameras.

Of course, the camera used for such method can be any kind of cameras that is feasible in different situations and for various demands. The correspondence features can be optionally extracted 11 using any suitable methods and techniques known in the field.

In one preferred embodiment of the method, the two-view geometry of the two cameras is estimated and determined 13 utilizing Perturbation Theorem. The theorem and its exploitation for matrix determinant minimization are therefore first introduced below.

**Perturbation Theorem and Application**

*Let A* and *D* be N-by-N symmetric real-valued matrices and $\{\lambda_i, \overrightarrow{u_i}\}_{i=1,...,N}$ the eigensystem of A, i.e. the set of eigenvalues and eigenvectors of *A,* it can be formulated such that:

$$\begin{cases} A\overrightarrow{u_i} = \lambda_i \overrightarrow{u_i} \\ \langle \overrightarrow{u_i}, \overrightarrow{u_j} \rangle = \delta_{i,j} \\ A = \sum_i \lambda_i \overrightarrow{u_i} \overrightarrow{u_i}^T \end{cases},$$

where $\langle a,b \rangle$ denotes the scalar product and $\delta_{i,j}$ is the Kronecker Delta-function

$$\delta_{i,j} = \begin{cases} 1 & i = j \\ 0 & i \neq j \end{cases}.$$

Consider a perturbated matrix *A' = A + εD,* for a small *ε,* and $\{\lambda_i', \overrightarrow{u_i}'\}_{i=1,...,N}$ the eigensystem of *A',* corresponding to $\{\lambda_i, \overrightarrow{u_i}\}_{i=1,...,N}$, the following relations hold:

$$\begin{cases} \lambda_i' = \lambda_i + \varepsilon \langle \overrightarrow{u_i}, D\overrightarrow{u_i} \rangle + O(\varepsilon^2) \\ \vec{u}_i' = \overrightarrow{u_i} + \varepsilon \sum_{j \neq i} \frac{\langle \overrightarrow{u_j}, D\overrightarrow{u_i} \rangle \overrightarrow{u_j}}{\lambda_i - \lambda_j} + O(\varepsilon^2) \end{cases}. \qquad (1)$$

The equations (1) are known in literature as Perturbation Theorem.

The Perturbation Theorem provides also a representation of a first order Taylor expansion of an eigensystem of a symmetric matrix $A(x) : R \rightarrow S_{N \times N}$, where $S_{N \times N}$ is the space of N-by-N symmetric positive-definite matrices. The first order Taylor expansion of *A(x)* is given by

$$A(x + \varepsilon) \cong A(x) + J_A(x)\varepsilon, \quad \text{where } J_A(x)\varepsilon = \frac{\partial A(x)}{\partial x}.$$

Corresponding to the above illustration, one can denote the eigensystem of *A(x)* as $\{\lambda_i(x), \overrightarrow{u_i}(x)\}_{i=1,...,N}$, and the first order Taylor expansion of the eigensystem is thus given by

$$\begin{cases} \lambda_i(x + \varepsilon) = \lambda_i(x) + J_{\lambda_i}(x)\varepsilon + O(\varepsilon^2) \\ \overrightarrow{u_i}(x + \varepsilon) = \overrightarrow{u_i}(x) + J_{u_i}(x)\varepsilon + O(\varepsilon^2) \end{cases}. \qquad (2)$$

Equations (2) can be understood as the eigensystem of a matrix *A(x)* affected by a small perturbation $J_A(x)\varepsilon$. Therefore the Perturbation Theorem implies that:

$$\begin{cases} J_{\lambda_i}(x) = \langle \vec{u_i}(x), \quad J_A(x)\vec{u_i}(x) \rangle \\ J_{u_i}(x) = \sum_{j \neq i} \dfrac{\langle \vec{u_j}(x), J_A(x)\vec{u_i}(x) \rangle \, \vec{u_j}(x)}{\lambda_i(x) - \lambda_j(x)} \end{cases}.$$

Furthermore, the Taylor expansion of the determinant of the matrix $A(x)$ can also be derived, given by the product of its eigenvalues counted with their algebraic multiplicities:

$$\det A(x + \varepsilon) = \prod_i \lambda_i(x + \varepsilon) \cong \prod_i (\lambda_i(x) + J_{\lambda_i}(x)\varepsilon). \qquad (3)$$

Substituting equation (2) in equation (3) and neglecting the higher order terms as a first approximation,

$$\det A(x + \varepsilon) \cong \prod_i \lambda_i(x) + \prod_i \left( \prod_{j \neq i} \lambda_j(x) \right) J_{\lambda_i}(x)\varepsilon.$$

The above equation provides the first order Taylor approximation of the determinant of the matrix $A(x)$, and its Jacobian can be approximated as

$$\frac{\partial \det A(x + \varepsilon)}{\partial x} \cong \prod_i \left( \prod_{j \neq i} \lambda_j(x) \right) J_{\lambda_i}(x).$$

An equivalent formulation can be derived to express the determinant of a non-symmetric matrix $A(x)$. For

$$A(x) = U\Sigma V^T = U \cdot D\left( \begin{bmatrix} \sigma_1 & \sigma_2 & \sigma_3 \end{bmatrix} \right) \cdot V^T$$

the Singular Composition of $A(x)$, where the notation $D(\omega)$ means a diagonal matrix built with the element of the vector $\omega$. Using the matrix relation $\det(AB) = \det(A) \det(B)$, one can obtain

$$\det\big(A(x)\big) = \det(U) \det\left( D\left( \begin{bmatrix} \sigma_1 & \sigma_2 & \sigma_3 \end{bmatrix} \right) \right) \det(V^T) = \prod_i \sigma_i(x). \qquad (4)$$

The singular values $\sigma_i$ are related to the eigenvalues $\lambda_i$ of the matrix $K(x) = A(x) \cdot A^T(x)$ by the relation $\lambda_i = \sigma_i^2$, therefore by differentiation it is obtained that

$$J_{\lambda_i} = 2\sigma_i \cdot J_{\sigma_i}. \qquad (5)$$

As the matrix $K(x)$ is by definition symmetric, the results of the Perturbation Theorem can be applied to compute the Jacobian $J_{\lambda_i}$ of the eigenvalues and express the first order Taylor approximation of the determinant of the non-symmetric $A(x)$ as

$$\det A(x + \varepsilon) \cong \det A(x) + \prod_i \left( \prod_{j \neq i} \sigma_j(x) \right) \frac{J_{\lambda_i}(x)}{2\sigma_i(x)} \varepsilon. \qquad (6)$$

**Two-View Geometry Determination**

The Perturbation Theorem introduced above is then utilized to estimate and determine 13 a two-view geometry of two cameras.

Fig. 2 shows a model of a two-camera set in a calibrated camera space, where a 3D point M projects on the two cameras on the image points m and $m'$ respectively. Under the calibrated camera condition, the corresponding incident vectors $\hat{m}$ and $\hat{m}'$ can be computed by inverting the projection functions of the cameras [I].

Without loss of generality, the projection center of one of the two cameras can be defined as located at the origin of the reference system, i.e. $\bigcirc=[0\ 0\ 0]^T$, the Euclidean transformation relating the two camera systems can be denoted as $\{R, t\} \in SO(3)$ and consequently the projection center of the second camera becomes $C = t$. This enables the definition of the incident vector in the second camera system as

$$\widehat{m}' \sim R \cdot (M - t),$$

where $\sim$ means equal up to a non-zero scale factor.

As known in 3D geometry, given a tetrahedron with vertices $\{a, b, c, d\}$, a corresponding volume V can be formulated as

$$V = \frac{1}{6}\det([(a - b) \quad (b - c) \quad (c - d)]).$$

Accordingly, for the model shown in the Fig. 2 and derived by geometric construction, the four points $\{C, \hat{m}, t, R^T\hat{m}' + t\}$ lay on a unique plane can identify a null-volume tetrahedron:

$$\det([-\widehat{m} \quad (\widehat{m} - t) \quad -R^T\widehat{m}']) = \det\big(A(R,t)\big) = 0, \qquad (7)$$

where for clarity the matrix A(R,t) explicitly indicates a function of the camera motions $\{R,t\}$.

By receiving 10 at least two images each captured by one of the two cameras and extracting 11 a plurality of correspondence features from the images, e.g. a set of N point correspondences between the two images, the two-view geometry of the two cameras can be formulated as the solution of a minimization problem

$$\{\bar{R}, \bar{t}\} = \underset{\{R,t\}\in SO(3)}{\mathrm{argmin}} \left\{ \sum_{k=1,\dots,N} \det^2(A_k(R,t)) \right\},$$

where $A_k(R,t)$ is a real valued square matrix generated according to equation (7) using the k-th point correspondences.

Preferably, this objection function is minimized using the Levemberg-Marquardt (LM) iterations. Within the LM optimization framework, the normal equation is built using equations (4) and (6) derived from the Perturbation Theorem to express contributions and their Jacobian, and it is iteratively solved for updating the solution vector.

**Evaluation**

The above described embodiment of the method for determining a two-view geometry of two cameras is evaluated on simulated data and compared with the standard approach provided by the minimization of Sampson error [I, VIII].

The scene model is set to be composed of a point cloud of 100 3D points and a stereo camera randomly located with respect to the point cloud at a fixed distance. Each camera is modelled as a 50° horizontal field-of-view lens and 1024×768 sensor, and the stereo geometry is randomly sampled from the subspace of Euclidean Transformation $\{R,t\}$, such that $\|t\| = 1$.

The image projections are corrupted using a zero-mean white Gaussian noise with increasing standard deviation ranging within the interval of [0, 2] pixels. For each level of image noise, a new scene is created fifty times and the median and the standard deviation of the estimation errors are collected. These are given by two angular measures: the angle between the estimated baseline vector and the real one, and the angle associated to the difference rotation

$\delta R$ between an estimated rotation $\tilde{R}$ and the real rotation, where $\delta R = R^T\tilde{R}$. For the estimation, the Levemberg-Marquardt algorithm is initialized with an ideal stereo geometry, given by the null rotation and the unit norm x-vector $\{I_3, [1\ 0\ 0]^T\}$.

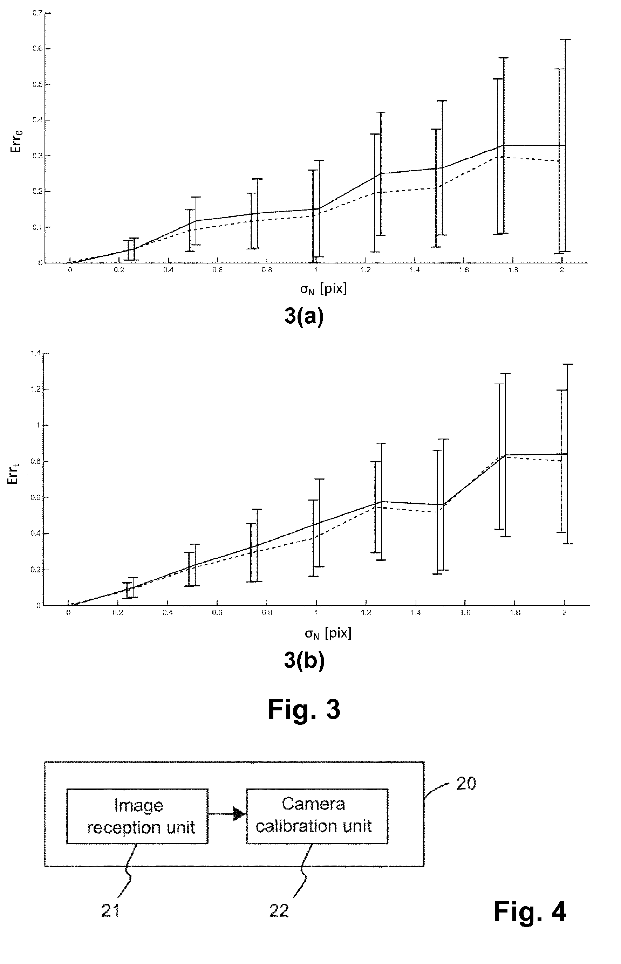

The evaluation results are shown in Fig. 3, in which Figs. 3(a) and 3(b) respectively show the measurements of the estimation error of the rotational and the translational component of the two-view geometry, which are denoted as $Err_\theta$ and $Err_t$ respectively. $Err_\theta$ is defined as the angle of the different rotations between the real rotation of the two-view geometry and the estimated one. $Err_t$ is defined as the angle between the real translation of the two-view geometry and the estimated one.

For both Figs. 3(a) and 3(b), the solid lines show the results obtained from the above proposed techniques and the dotted lines show the results obtained from the Samson error minimization. It can be seen that the accuracy of the above proposed method for determining a two-view geometry of two cameras is higher than the one achieved by the minimization of Sampson Error. In addition, the convergence of the minimization of the proposed error function is achieved irrespective to the proximity of the initialization point to the actual solution. This does not happen for the Sampson Error minimization where a consistent number of trials fail to converge to the right solution.

Fig. 4 schematically depicts an apparatus 20 configured to perform a method for determining a two-view geometry of two cameras. The apparatus 20 comprises an image reception unit 21 and an operation unit 22. The image reception unit 21 is configured to receive 10 at least two images each captured by one of the two cameras. The operation unit 22 is configured to extract 11 a plurality of correspondence features from the images, to generate 12 a matrix for each pair of the correspondence features, and to determine 13 a two-view geometry of the two cameras by calculating a minimization of the sum of determinants of the matrices. The matrix preferably indicates a function of camera motions of the two cameras. Preferably, the operation unit 22 determines 13 the two-view geometry of the two cameras using Perturbation Theorem and Levemberg-Marquardt iterations.

REFERENCES

[I] R. Hartley and A. Zisserman, Multiple View Geometry in Computer Vision (2 ed.). Cambridge University Press, New York, NY, USA, pp. 155-157, 2003

[II] H. C. Longuet-Higgins, "A computer algorithm for reconstructing a scene from two projections", Nature 293, 133-135 (September 1991)

[III] E. Kruppa, "Zur Ermittlung eines Objektes aus zwei Perspektiven mit innerer Orientierung", Sitzungsberichte der Mathematisch Naturwissenschaftlichen Kaiserlichen Akademie der Wissenschaften, 122, 1939-1948, 1913

[IV] O. D. Faugeras and S. Maybank, "Motion from point matches: multiple of solutions", IEEE Proceedings Workshop on Visual Motion, 248-255, 1989

[V] D. Nister, "An efficient solution to the five-point relative pose problem", IEEE Transactions on Pattern Analysis and Machine Intelligence, 26(6), 756-777, 2004

[VI] B. Triggs, "Routines for relative pose of two calibrated cameras from 5 points", MOVI-IMAG-INRIA Rhône-Alpes / GRAVIR, Technical Report 2000

[VII] J. Philip, "A non-iterative algorithm for determining all essential matrices corresponding to five point pairs", The Photogrammetric Record, 15(88), 589-599, 2003

[VIII] D. Batra, B. Nabbe and M. Hebert, "An alternative formulation for the five point relative pose problem", IEEE Workshop on Motion and Video Computing 2007 (WMVC'07)

**Claims**

1. A method for determining a two-view geometry of two cameras, comprising:

    - receiving (10) at least two images each captured by one of the two cameras;
    - extracting (11) a plurality of correspondence features from the images;
    - generating (12) a matrix for each pair of the correspondence features, the matrix indicating a function of camera motions of the two cameras; and

- determining (13) a two-view geometry of the two cameras by calculating a minimization of the sum of determinants of the matrices.

2. The method of claim 1, wherein the correspondence features include a set of N point correspondences between the received images.

3. The method of claim 1 or 2, wherein the two-view geometry of the two cameras is determined (13) using Perturbation Theorem and Levemberg-Marquardt iterations.

4. The method of claim 3, wherein the function of a matrix represents a volume of a tetrahedron implicitly drawn in 3D space by the corresponding pair of the extracted correspondence features.

5. The method of one of the preceding claims, wherein calculating a minimization of the sum of determinants of the matrices includes solving the problem of

$$\{\bar{R}, \bar{t}\} = \operatorname*{argmin}_{\{R,t\} \in SO(3)} \left\{ \sum_{k=1,\dots,N} \det^2(A_k(R,t)) \right\}$$

where $SO(3)$ is the space of Euclidean transformations, $\{\overline{R},\overline{t}\}$ is the estimated Euclidean transformation relating two camera systems, $A_k(R,t)$ is a real valued square matrix that is explicitly indicated as a function of $\{R,t\}$ and is generated using k-th point correspondence in such a way that its determinant $\det A\_k(R,t)$ represents the volume of a tetrahedron identified in a 3D space, the tetrahedron being defined by two involving points and two camera centers.

6. An apparatus for determining a two-view geometry of two cameras, comprising:

   - an image reception unit (21) configured to receive at least two images each captured by one of the two cameras; and
   - an operation unit (22) configured to extract (11) a plurality of correspondences from the images, to generate (12) a matrix for each pair of the correspondence features, and to determine (13) a two-view geometry of the two cameras by calculating a minimization of the sum of determinants of the matrices, wherein the matrix indicates a function of camera motions of the two cameras.

7. The apparatus of claim 6, wherein the operation unit (22) determines (13) the two-view geometry of the two cameras using Perturbation Theorem and Levemberg-Marquardt iterations.

8. A computer readable storage medium having stored therein instructions for determining a two-view geometry of two cameras, which when executed by a computer, cause the computer to:

   - receive at least two images each captured by one of the two cameras;
   - extract a plurality of correspondence features from the images;
   - generate a matrix for each pair of the correspondence features, the matrix indicating a function of camera motions of the two cameras; and
   - determine a two-view geometry of the two cameras by calculating a minimization of the sum of determinants of the matrices.

**Fig. 1**

**Fig. 2**

3(a)

3(b)

**Fig. 3**

**Fig. 4**

Europäisches
Patentamt

European
Patent Office

Office européen
des brevets

## EUROPEAN SEARCH REPORT

Application Number

EP 15 30 6195

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Stephen Se ET AL: "Passive 3D Imaging" In: "3D Imaging, Analysis and Applications", 1 January 2012 (2012-01-01), Springer London, London, XP055158913, ISBN: 978-1-44-714063-4 pages 35-94, DOI: 10.1007/978-1-4471-4063-4_2, * 2.7; 2.4; 2.4.3 & 2.4.4; 2.5 * | 1-8 | INV. H04N13/02 G06T7/00 |
| X | POLLEFEYS ET AL: "Tutorial on 3D Modeling from Images", INTERNET CITATION, 26 June 2000 (2000-06-26), XP002313028, Retrieved from the Internet: URL:DUBLIN, IRELAND http://www.esat.kuleuven.ac.be/pollefey/tutorial/tutorial.pdf [retrieved on 2005-01-11] * 4.3;5.4.1 * | 1-8 | |

TECHNICAL FIELDS
SEARCHED        (IPC)

H04N
G06T

The present search report has been drawn up for all claims

| Place of search | Date of completion of the search | Examiner |
|---|---|---|
| The Hague | 30 September 2015 | Cooke, Edward |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 122 041 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. HARTLEY ; A. ZISSERMAN.** Multiple View Geometry in Computer Vision. Cambridge University Press, 2003, 155-157
- **H. C. LONGUET-HIGGINS.** A computer algorithm for reconstructing a scene from two projections. *Nature,* September 1991, vol. 293, 133-135
- **E. KRUPPA.** Zur Ermittlung eines Objektes aus zwei Perspektiven mit innerer Orientierung. *Sitzungsberichte der Mathematisch Naturwissenschaftlichen Kaiserlichen Akademie der Wissenschaften,* 2013, vol. 122, 1939-1948
- **O. D. FAUGERAS ; S. MAYBANK.** Motion from point matches: multiple of solutions. *IEEE Proceedings Workshop on Visual Motion,* 1989, 248-255
- **D. NISTER.** An efficient solution to the five-point relative pose problem. *IEEE Transactions on Pattern Analysis and Machine Intelligence,* 2004, vol. 26 (6), 756-777
- **B. TRIGGS.** Routines for relative pose of two calibrated cameras from 5 points. *MOVI-IMAG-INRIA Rhône-Alpes / GRAVIR, Technical Report,* 2000
- **J. PHILIP.** A non-iterative algorithm for determining all essential matrices corresponding to five point pairs. *The Photogrammetric Record,* 2003, vol. 15 (88), 589-599
- **D. BATRA ; B. NABBE ; M. HEBERT.** An alternative formulation for the five point relative pose problem. *IEEE Workshop on Motion and Video Computing,* 2007

12